# EUROPEAN PATENT APPLICATION

(11) **EP 1 570 749 A1**
(43) Date of publication of application: **07.09.2005**
(21) Application number: 05251026.0
(22) Date of filing: 23.02.2005
(51) Int. Cl.: A23L 1/16, A23L 1/00

(54) **Process of manufacturing low protein flour pasta**

(30) Priority: 03.03.2004 US 792190
(71) Applicant: KRAFT FOODS HOLDINGS, INC., Illinois 60093 (US)
(72) Inventor: Hansen, Timothy S., LaGrange, Illinois 60525 (US); Padmanabhan, Mahesh, Buffalo Grove, Illinois 60089 (US)
(74) Representative: Smaggasgale, Gillian Helen

(57) **Abstract**

The invention is directed to a method of producing a dried pasta from low protein flour and to the dried pasta produced from the low protein flour. Low protein flour and water are blended to produce a pasta dough with a moisture content of about 25 to about 45 percent. The low protein flour has a protein level less than about 10 percent and the pasta dough does not contain significant amounts of a texture enhancing agent. The pasta dough is extruded into a desired pasta shape. The desired pasta shape is dried at a temperature of at least 75°C and a relative humidity of at least about 70 percent for a time sufficient to produce a dried pasta with a finished moisture content of about 8 to about 13 percent. The dried pasta is produced has a textural firmness, after cooking, of about 12 to about 21 kgf (kilograms shear force).

## Description

### FIELD OF THE INVENTION

The present invention is generally directed to a product and a method of producing a dried pasta containing a significant amount of low protein flour, wherein the pasta is texturally firm after subsequent consumer cooking. More specifically, this invention relates to a product and a method of producing a dried pasta from a low protein flour, without the use of texture enhancing agents, to achieve a texturally firm pasta after subsequent consumer cooking.

### BACKGROUND OF THE INVENTION

The manufacture of dried pasta is known in the art. Conventional dried pasta is generally manufactured by blending flour with water to create a dough of a desired moisture content. If desired, seasonings, spices, or flavorings can be added to the dough to enhance flavors. After mixing, the dough is extruded into a desired pasta shape and then typically dried for several hours at low temperatures (generally about 50°C) and under controlled relative humidity (generally about 30 to about 50 percent) to a predetermined moisture level (generally about 11 to about 12.5 percent). In order to consume the product, the consumer must cook and reconstitute the dried pasta to a desired doneness or firmness level.

When eating cooked pasta, consumers generally prefer a texturally-firm pasta, sometimes referred to as "al dente." To achieve pasta with this characteristic, a combination of pasta manufacturing methods and consumer cooking times must be optimized. Traditionally, a high protein flour or a combination of high protein flours (generally greater than about 12 percent protein) is used in pasta manufacturing to meet this consumer expectation. High protein flours that have been conventionally used in pasta manufacture include durum, durum semolina, and/or hard red spring (HRS) wheat. These high protein flours typically contain from about 12 to about 15 percent protein. Such high protein flours are normally used in producing pasta because it is known that increasing protein levels in pasta dough improves the final textural firmness of the pasta. Unfortunately, these higher protein flours are generally more expensive.

In addition to the manufacturing process, cooking time by the consumer also affects the textural firmness of pasta. The consumer must cook or reconstitute the dried pasta for a time sufficient to achieve the desired doneness.

Generally, lower protein flours (typically less than about 10 percent protein), such as soft red winter (SRW) wheat, are less expensive. Such low protein flours, which are typically used to make cakes, cookies, snack foods, crackers, and pastries, are not as suitable for typical dried pasta manufacture. The lower protein flours, typically about 7 to about 12 percent protein, are not capable of meeting consumer expectations regarding pasta textural firmness if they merely replace most (generally more than about 30 percent) or all of the higher protein flours in current pasta manufacturing techniques. Previous attempts at obtaining consumer-desired, texturally firm pasta with low protein flours focused on supplementing the pasta dough with additives or coatings together with higher temperatures or multiple drying steps.

For example, one attempt to increase pasta textural firmness with soft wheat flour used the addition of texture enhancing agents combined with a short, increased temperature drying. Suggested texture enhancing agents include wheat gluten, eggs, glyceryl monosterate, or propylene glycol alginate. Pastas have also been prepared from soft wheat flours wherein humectants, such as sodium chloride or potassium chloride, have been spray coated on the surface of the pasta or added directly to the dough. Pastas prepared with such humectants have been dried at temperatures of about 80 to 110°C. For example, U.S. Patent No. 5,958,488 discloses a method for preparing a shelf stable pasta having a moisture content of about 15 to about 35 percent wherein a fresh pasta (prepared from soft wheat flour) is steamed and partially dried before coating with a solid humectant (e.g., sodium chloride). U.S. Patent No. 6,017,573 provides an intermediate moisture pasta prepared from a soft wheat flour wherein a humectant (e.g., sodium chloride, glycerol, sorbitol) and an alkali are incorporated into the pasta dough before partially drying the pasta.

U.S. Patent No. 6, 326,049 discloses a pasta prepared from soft wheat flour wherein the pasta has a reduced residual lipase activity. In one embodiment, lipase was added to the dough followed by a heat treatment from about 84 to 100°C for about 200 to 700 minutes. The heat treatment is designed to reduce the lipase activity to less than about 100 LU/kg of pasta.

U.S. Patent No. 5,030,462 provides another attempt to improve pasta textural firmness by coating the pasta with egg whites and edible oils. The coated pasta was heated at 80 to 200°C for 0.5 to 20 minutes to coagulate, dry, and bind the coating and then heated at 95 to 110°C for 5 to 15 minutes to partially dry the pasta.

There remains a need to provide an acceptable pasta prepared using low protein flour that produces consumer desired textural firmness upon cooking. Moreover, there remains a need to provide a dried pasta from a low protein flour, which does not contain significant amounts of texture enhancing agents, and which provides textural firmness upon cooking similar to that provided by a conventional pasta prepared with high protein flours.

### SUMMARY OF THE INVENTION

The invention is directed to a method of producing a dried pasta from a low-protein flour and to the dried pasta produced from the low protein flour. First, low protein flour and water are blended to produce a pasta dough with a moisture content of about 25 to about 45 percent. The low protein flour has a protein level less than about 10 percent. The pasta dough does not contain significant amounts of a texture enhancing agent. Second, the pasta dough is extruded into a desired pasta shape. Third, the desired pasta shape is dried at a temperature of at least 75°C for a time sufficient to produce a dried pasta with a finished moisture content of about 8 to about 13 percent. The dried pasta that is produced has a similar textural firmness, after cooking, to a comparable pasta produced using a high protein flour with a protein level greater than about 12 percent. Additionally, the method does not add significant amounts of texture enhancing agents to the dried pasta.

Preferably, the temperature of the water used to prepare the pasta dough is about 35 to about 45°C. Preferably, the drying temperature is at least about 80°C, and more preferably at least about 100°C. Preferably the drying at elevated temperatures is conducted for at least about 3 hours (preferably for at least about 4.5 hours) at a relative humidity of at least about 70 percent (preferably about 75 to about 85 percent).

The dried pasta of this invention generally has a textural firmness of about 12 to about 21 kgf (kilograms shear force) when prepared by a consumer. This level of firmness can be obtained by using soft wheat flour without adding significant amounts (generally less than about 0.1 percent, preferably less than about 0.05 percent, and more preferably none) of texture enhancing agents.

The invention also is directed to a dried pasta that is produced from the method generally recited above. The low-protein flour pasta product of this invention comprises a low protein flour that has a protein level of less than 12 percent (and preferably less than about 10 percent) and does not contain significant amounts of a texture enhancing agent. The pasta product is dried at elevated temperatures and has a moisture content from about 8 to about 13 percent. This dried pasta has a similar textural firmness after cooking to a comparable pasta produced with a hard wheat flour with a protein level greater than about 12 percent. Additionally, the dried pasta product may have a textural firmness of about 12 to about 21 kgf.

The invention is also directed to a dried pasta that comprises a soft wheat flour wherein the soft wheat flour has a protein level of less than 10 percent and wherein the pasta does not contain significant amounts of texture enhancing agents. The dried pasta has a moisture content of about 8 to about 13 percent. After cooking, this dried pasta also has a similar textural firmness after cooking to a comparable pasta produced with a high protein flour with a protein level greater than about 12 percent. Additionally, the dried pasta product may have a textural firmness of about 12 to about 21 kgf.

These and other advantages of the present invention will become apparent through the following detailed description.

### DETAILED DESCRIPTION

Generally, this invention provides for a product and a method to produce a dried pasta using low protein flour (generally less than about 12 percent protein and preferably less than about 10 percent protein) and without the addition of significant amounts of a texture enhancing agent. The dried pasta has a similar texture and firmness, after consumer cooking and reconstitution, to a pasta made using a high protein flour (i.e., a protein level greater than about 12 percent).

Typically, as discussed previously, consumers prefer a texturally-firm pasta after cooking. This desired firmness can be obtained with conventional dried pastas if the consumer cooks the pasta for approximately 7 to 10 minutes. Quantifying consumer preferences can be accomplished with an Ottawa extrusion cell attachment on an Instron Universal testing machine by measuring the extrusion strength of the cooked pasta. Generally, consumer preferences for cooked pasta firmness corresponds to extrusion strength values from about 12 to about 21 kgf, and preferably about 15 to about 18 kgf. Current pasta manufacturing techniques using high protein flours with protein levels from about 12 to about 15 percent will generally meet these firmness requirements. Consequently, for purposes of this invention, "acceptable results" means a cooked pasta that corresponds to consumer desired textural firmness (i.e., about 12 to about 21 kgf).

For comparison, pastas prepared with soft wheat flour using conventional pasta processing conditions (i.e., those normally used for high protein pastas) have extrusion strengths of about 8 to about 10 kgf, which are generally unacceptable. Also for comparison purposes, although pasta prepared using soft wheat flour containing conventional levels (i.e., greater than about 0.25 percent) of texture enhancing agents generally have acceptable firmness, the inclusion of such texture enhancing agents adds to the costs of the resulting pasta. Moreover, it is generally desirable to provide pasta which does not contain significant amounts of additives. The present invention allows the use of low protein flour (generally less than about 12 percent protein and preferably less than about 10 percent protein) to provide pasta with acceptable firmness without using texture enhancing agents.

The method of this invention produces acceptable results for a consumer desired texturally firm pasta by first blending low protein flour and warm water to produce a pasta dough with a moisture content of about 25 to about 45 percent, and preferably about 28 to about 32 percent. The pasta dough is then extruded using traditional methods to produce a desired pasta shape. The pasta shape is then dried using a high temperature drying profile to achieve a final dried pasta with a moisture content of about 8 to about 13 percent, preferably about 11 to about 13 percent. The dough or extruded pasta does not contain significant quantities of texture enhancing agents to achieve the acceptable results. For purposes of this invention, the final pasta should contain less than about 0.1 percent of texture enhancing agents, preferably less than about 0.05 percent, and most preferably no added texture enhancing agents.

Low protein flours suitable for use in this invention include flours having a protein level less than about 12 percent (preferably less than about 10 percent) or mixtures of flours having a total protein level of less than about 12 percent (preferably less than about 10 percent). Flours with protein levels of about 7 to about 12 and preferably about 8 to about 10 percent protein are the types of flours which produce acceptable results using the method of this invention. The method of this invention also produces acceptable results from blends of high and low protein flours so long as the weighted average protein from the flour is less than about 12 percent (and preferably less than about 10 percent). Generally, however, low protein flours without any added high protein flour are preferred. As will be discussed in more detail below, acceptable results are obtained without the addition of significant amounts of liquid or dry texture enhancing agents to the flour and/or subsequent dough.

For best results, the water used to prepare the dough should be warm, preferably about 25 to about 45°C. The flour-water mixture is blended for a sufficient time to produce a homogeneous pasta dough with a moisture content of about 25 to about 45 percent, preferably about 28 to about 32 percent. Conventional pasta mixers can be used for this blending step. The pasta dough should be homogenous in order to produce a consistent and uniform pasta product.

The pasta dough is then formed into a desired pasta shape or extrudate using conventional pasta making techniques and equipment. For example, the homogenous dough can be forced through the holes of an extruder die or can be pressed between rollers to obtain the desired shape. Extrudates formed using an extruder die can be cut to the desired length. Extrudates formed using rollers will be in the form of thin sheets which can then be cut into thin strips and to length (or other shapes) before further processing. All conventional pasta shapes can be used in the practice of this invention including, for example, spaghetti, vermicelli, fettuccine, linguine, ziti, elbow spaghetti, orqu, shell, elbow macaroni, rigatoni, macaroni, twist rings, mafalda, alphabets, lasagna, spirals, manicotti, angel hair, noodles, kid's shapes such as teddy bears, and the like. Thin-wall extrudates or pasta shapes are, however, preferred since they generally require shorter drying times as well as shorter cooking times when prepared by the consumer. For purposes of this invention, "thin-wall" means a wall thickness of less than about 0.037 inches, preferably in the range of about 0.014 inches to about 0.035 inches.

The shaped pasta is then subjected to a high temperature drying profile for a sufficient amount of time to achieve the desired final moisture content and the desired textural firmness when prepared by the consumer. Drying temperatures greater than 75°C will generally produce pasta with the acceptable results. Preferably, temperatures greater than about 80°C; and more preferably greater than about 100°C are used to achieve dried pasta with the desired textural firmness upon reconstitution. Generally the relative humidity during drying is at least about 70 percent, and preferably about 75 to about 85 percent. Although not wishing to be limited by theory, it is believed that the increased textural firmness of the reconstituted pasta is achieved with the low protein flour in this invention predominately as a result of gluten thermosetting (i.e., denaturation or crosslinking) due to the high drying temperatures. Additionally, it is also believed that changes in the cooking behavior of the starch as a result of the high drying temperatures contribute to the increased textural firmness.

A dried pasta with a final moisture content of about 8 to about 13 percent, and preferably about 11 to about 13 percent, is desired; consequently, the drying conditions should be adjusted in order to produce a final dried pasta that also achieves the acceptable results of pasta firmness when prepared by the consumer. Generally, the following drying conditions are acceptable: temperatures of about 75 to about 130°C, relative humidity of at least about 70 percent, and drying times of about 1 to about 6 hours. More preferably, temperatures of about 80 to about 100°C, relative humidity of about 75 to about 85 percent, and drying times of about 2 to about 5 hours. Of course, other drying profiles within these overall drying conditions are possible so long as the desired firmness in the final product, after cooking, is obtained.

As noted above, the process of this invention can be implemented using conventional pasta making equipment, including conventional pasta drying ovens for the drying portion of the process. The drying ovens should, of course, be capable of controlling the temperature and relative humidity to which the pasta shapes are exposed as a function of time. Generally, forced air drying ovens with discrete or separate drying zones and separate temperature and humidity controls for each drying zone are preferred. Separate drying zones allow the temperature and relative humidity to be easily varied and controlled as the pasta passes through the drying oven. Continuous, multi-conveyor belt type dryers where the pasta shapes drop from one belt to another are especially suited for the practice of this invention; the temperature and relative humidity can be controlled such that the pasta on each belt can be exposed to the desired temperature and humidity conditions.

Separate drying ovens connected in series, where each oven has its own separate temperature and relative humidity controller, are generally preferred. Preferably the drying oven or ovens are forced air types which allows for better control of the humidity near the surface of the pasta shapes. Especially in the early stages of the drying process, water vapor removed from the pasta can raise the relative humidity near the pasta surface to levels higher than desired, thereby slowing down the drying process and resulting in a less desirable product. By removing this potential "layer" of high humidity near the pasta surface, the humidity can be controlled with the ranges desired in the present process. High capacity lines (in the range of 6000 Ibs/hr or above) may result in problems in controlling the percentage of relative humidity in the predryer. Accurate temperature and relative humidity control within the ranges specified herein should be maintained in the predryer in such high capacity lines to assure good quality in terms of color, flavor, nutrients, structural integrity, and textural firmness.

The desired texture and firmness of the cooked pasta is achieved without the addition of significant amounts of texture enhancing agents to the dough, to the extruded pasta, or to the dried pasta. For purposes of this invention, a "texture enhancing agent" is a substance (dry or liquid) that is added to the pasta dough or coated on the surface of the extruded or dried pasta to improve the textural firmness of the pasta after consumer reconstitution. Texture enhancing agents generally include, but are not limited to, any material that increases the level of protein in the dough. Examples of such texture enhancing agents include: wheat gluten, dried or liquid egg products, glyceryl monostearate, propylene glycol alginate, humectants such as sodium chloride or potassium chloride, lipase, or edible oils. For purposes of this invention, "significant amounts" with respect to the texture enhancing agents is intended to mean that less than about 0.2 percent of the textural enhancing agent is added, preferably less than about 0.1 percent is added, and more preferably no textural enhancing agent is added.

Advantages and embodiments of this invention are further illustrated by the following examples, but the particular materials and amounts thereof recited in these examples, as well as other conditions and details, should not be construed to unduly limit this invention. All percentages are by weight unless otherwise indicated.

Example 1: This example illustrates the manufacture of a dried pasta using the method of this invention. A generic soft red wheat flour (protein of about 8 percent) from Nabisco (Toledo, OH) was mixed with warm water of a temperature of about 38 to about 43°C. The flour/water mixture was blended for about 13 minutes to form a dough with a moisture content of 33.5 percent. The dough was then formed into small balls. The small dough balls were extruded through a DeMaco extrusion system using a elbow spaghetti die under conventional operating conditions. The extruded pasta was dried for 4.5 hours at 86°C at 80 percent relative humidity to produce a finished dried pasta with a moisture content of 8.9 percent and with a wall thickness of 0.037 inches. The dried pasta was cooked for 10 minutes in boiling water. Extrusion strength testing on an Instron Universal testing machine with an Ottawa extrusion cell attachment resulted in firmness values of about 17.4 kgf. A control sample was prepared in the same manner except that conventional drying conditions (i.e., 5.5 hours at 54°C and 72 percent relative humidity) were used to achieve approximately the same moisture content. The firmness values of the dried pasta in the control sample was about 9.4 kgf.

Example 2: This example compares a pasta produced using low protein flour with different drying profiles. Four different flours were used: SRW Generic, SRW 25R26, 90:10 SRW Generic:HRS Blend, and HRS. The SRW Generic was obtained from Nabisco (Toledo, OH) and had protein contents of about 8 percent. The SRW 25R26 flour was obtained from grain grown from 25R26 variety seeds (Pioneer Hi-Bred International) and also had a protein content of about 8 percent. The HRS flour was from Horizon Milling (Minneapolis, MN) and had a protein content of about 13.1 percent. The blended material had a protein of about 8.5 percent. An elbow spaghetti pasta was prepared as in Example 1 and then dried using a conventional drying profile or a high temperature drying profile. The conventional drying profile was as follows: 5.5 hours at 54°C at 72 percent relative humidity. The high temperature profile was as follows: 4.5 hours at 86°C at 80 percent relative humidity. All dried pasta was cooked for 10 minutes in boiling water. Firmness was determined as in example 1 and is shown in Table 1.

**Table 1:**

| **Instron Firmness Comparison** | | | |
|---|---|---|---|
| **Flour Type** | **Conventional Drying Firmness (kgf)** | **High Temperature Drying Firmness (kgf)** | **Increase in Firmness (%)** |
| **SRW Generic** | 9.7 | 16.8 | 74.2 |
| **SRW 25R26** | 9.5 | 17.2 | 80.0 |
| **90:10 SRW Generic:HRS** | 14.8 | 19.2 | 27.5 |
| **HRS** | 24 | 27 | 12.5 |

This example clearly demonstrates that acceptable firmness pasta can be prepared using low protein flour.

## Claims

1. A method of producing a low protein flour pasta, said method comprising:
blending a low protein flour and water to produce a pasta dough with a moisture content of about 25 to about 45 percent, wherein the low protein flour has a protein level of less than about 12 percent;
extruding the pasta dough to form a desired pasta shape;
drying the desired pasta shape at a temperature of at least about 75°C and a relative humidity of at least about 70 percent for a time sufficient to produce a dried pasta with a final moisture content of about 8 to about 13 percent;
wherein the dried pasta does not contain significant amounts of a texture enhancing agent; and
wherein the dried pasta has a textural firmness, after cooking, of about 12 to about 21 kgf.

2. The method of Claim 1, wherein the low protein flour has a protein level of less than about 10 percent

3. The method of Claim 1 or 2, wherein the drying temperature for the desired pasta shape is at least about 80°C.

4. The method of any one of Claims 1 to 3, wherein the drying temperature for the desired pasta shape is at least about 100°C.

5. The method of any one of Claims 1 to 4, wherein the desired pasta shape is dried for at least about 4.5 hours and the relative humidity is about 75 to about 85 percent.

6. The method of any one of Claims 1 to 5, wherein the textural firmness after cooking is about 15 to about 18 kgf.

7. The method of any one of Claims 1 to 6, wherein the low protein flour is a soft wheat flour.

8. A low protein flour pasta comprising a low protein flour, wherein the low protein flour has less than about 12 percent protein, wherein the low protein flour pasta has a moisture content of about 8 to about 13 percent and a textural firmness, after cooking, of about 12 to about 21 kgf, and wherein the low protein flour pasta does not contain significant amounts of a texture enhancing agent.

9. The low protein flour pasta of Claim 8, wherein the low protein flour pasta is prepared by the method of any one of Claims 1 to 7.

10. A low-protein flour, dried pasta comprising:
a soft wheat flour wherein the soft wheat flour has a protein level of less than 12 percent and wherein the pasta does not contain significant amounts of a texture enhancing agent;
a moisture content, after drying, from about 8 to about 13 percent; and
wherein the dried pasta has a textural firmness, after cooking, of about 12 to about 21 kgf.

11. The low protein flour pasta of Claim 10, wherein the protein level of the soft wheat flour is less than about 10 percent.

12. The low protein flour pasta of Claim 10 or 11, wherein the textural firmness after cooking is about 15 to about 18 kgf.
